# EUROPEAN PATENT SPECIFICATION

(11) **EP 4 540 530 B1**
(45) Date of publication and mention of the grant of the patent: **19.08.2026**
(21) Application number: 23739408.5
(22) Date of filing: 12.06.2023
(51) Int. Cl.: F16B 5/02, F16B 21/02

(54) **SCREW LOCK**
SCHRAUBSCHLOSS
VERROU À VIS

(30) Priority: 14.06.2022 US 202263366387 P
(43) Date of publication of application: 23.04.2025
(73) Proprietor: Tesla, Inc., Austin, TX 78725 (US)
(72) Inventor: YU, Yongquan, Austin, Texas 78725 (US)
(74) Representative: Bryn-Jacobsen, Caelia
(86) International application number: PCT/US2023/025077
(87) International publication number: WO 2023/244544

(56) References cited:
- US-A1- 2018 119 715

## Description

### CROSS-REFERENCE TO RELATED APPLICATIONS

This application claims priority to U.S. Provisional Patent Application No. 63/366,387, filed June 14, 2022.

### TECHNICAL FIELD

The present invention relates to a fastener. More particularly, the fastener can provide high retention and be made without steel materials to avoid corrosion issues.

### BACKGROUND

Many fasteners are made of metal materials for better strength and durability. In the auto industry, for example, metal fasteners, such as fasteners constructed as stainless steel materials, have been widely used to hold components together for vehicle impact concerns. However, under some environments, oil, humidity, and heat can cause corrosion issues in components and fasteners, especially when stainless steel parts are used. Steel fasteners, such as galvanized spring steel fasteners, can get rust in weeks when used to fasten stainless steel parts. Stainless steel fasteners are expensive and difficult to make in mass production due to the stiffness of stainless steel. A. snap fit fastener made of stainless steel does not provide desirable insertion or extraction force performance because of its stiffness.

US2018/119715A1 in an abstract states that "A screw grommet is configured such that a rectangular cylindrical body is passed through an attachment hole of a door inner panel, and detent portions are configured to project to opposite sides to an axial center side of the body and to be displaceable toward the axial center side of the body and toward the opposite side to the axial center side of the body, so that the detent portions are locked to an edge portion side of the attachment hole. First parts in an edge portion of the attachment hole and second parts in the edge portion of the attachment hole are provided."

### SUMMARY OF THE INVENTION

The invention is set out in the appended set of claims.

The disclosure relates generally to a non-metal screw lock fastener that provides a high retention. More specifically, various embodiments of this disclosure relate to a non-metal screw lock that can fasten stainless steel parts of a vehicle.

One aspect of this disclosure includes a fastener comprising a lock extending between a front end of the fastener and a rear end of the fastener. The lock comprises a body, a disk at the rear end, a head at the front end, and two blocks extending from opposite sides of the body of the lock proximate the rear end. The fastener further comprises a retainer disposed over the lock. The retainer comprises a cavity extending between two openings on opposite sides of the retainer. The retainer also comprises one or more snap fit joints disposed on an external surface of the retainer and proximate the rear end and configured to fasten a first part. The retainer further comprises a screw configured to enter through a second part and into the body of the lock. The body of the lock is substantially inside the cavity of the retainer. Rotating the screw in a first direction causes the lock to rotate and the two blocks to protrude from the openings of the retainer, thereby locking the first part and the second part between the two blocks and the screw.

One variation of the aspect above is, wherein the retainer has a substantially rectangular profile.

One variation of the aspect above further comprises a sealer configured to extend over the disk of the lock.

One variation of the aspect above is, wherein the sealer is sized and shaped to radially extend from the disk of the lock to create a sealing between the first part and the second part.

One variation of the aspect above is, wherein the retainer further comprises two or more arms configured to receive and engage the head of the lock to retain the lock inside the retainer.

One variation of the aspect above is, wherein the head of the lock is tapered such that the head of the lock can move past the two or more arms of the retainer and be stopped from moving back.

One variation of the aspect above is, wherein the lock comprises nylon and glass fiber.

One variation of the aspect above is, wherein the retainer comprises plastic.

One variation of the aspect above is, wherein the sealer comprises rubber.

One variation of the aspect above is, wherein the screw comprises a tapping screw.

One variation of the aspect above is, wherein the fastener is waterproof.

One variation of the aspect above is, wherein rotating the screw in a second direction opposite the first direction causes the lock to rotate and the two blocks of the lock to enter the cavity of the retainer.

Another aspect of this disclosure is a fastener comprising a lock and a retainer. The lock comprises a body, a disk extending radially from a first end of the body, and one or more blocks extending from opposite sides of the body. The retainer is disposed over the lock, the retainer comprising a cavity extending between two openings on opposite sides of the retainer. The retainer further comprises a screw configured to enter through a second part and into the body of the lock. Rotating the screw in a first direction causes the lock to rotate and the one or more blocks to protrude from the openings of the retainer, thereby securing a first part between the disk and the one or more blocks, and securing a second part between the disk of the lock and the screw.

One variation of the aspect above is, wherein the retainer further comprises one or more snap fit joints disposed on an external surface of the retainer, and configured to fasten the first part.

One variation of the aspect above is, wherein the retainer has a substantially rectangular profile.

One variation of the aspect above is, wherein the body of the lock is substantially inside the cavity of the retainer.

One variation of the aspect above is, wherein the one or more blocks of the lock are proximate the disk of the lock.

One variation of the aspect above further comprises a sealer sized and shaped to radially extend from the disk of the lock and create a sealing between the first part and the second part.

### BRIEF DESCRIPTION OF THE DRAWINGS

The present invention is described with reference to the accompanying drawings, in which like reference characters reference like elements, and wherein:
Fig. 1A is a perspective view of an embodiment of a screw lock in a locked position.
Fig. 1B is a perspective view of the screw lock in Fig. 1A in an unlocked position.
Fig. 2 is an exploded view of the screw lock in Fig. 1A in an unlocked position.
Fig. 3 is a top view of the screw lock in Fig. 1A.
Fig. 4A is a side view of the screw lock in Fig. 1A in an unlocked position.
Fig. 4B is a cross-sectional view of the screw lock taken along a line A-A in Fig. 4A.
Fig. 5A is a front view of the screw lock in Fig. 1A in an unlocked position.
Fig. 5B is a cross-sectional view of the screw lock taken along a line B-B in Fig. 5A.
Fig. 5C is a cross-sectional view of the screw lock taken along a ling C-C in Fig. 5A.
Fig. 6A is a side perspective view of the screw lock in Fig. 1A to be installed onto a first panel.
Fig. 6B is a side perspective view of the screw lock in Fig. 6A installed on the first panel in Fig. 6A.
Fig. 7A is a perspective view of the screw lock in Fig. 1A upside down and in an assembly with a first panel, a second panel, and a tapping screw to be installed.
Fig. 7B is a perspective view of the assembly in Fig. 7A with the tapping screw. installed illustrating a torque that can be applied to the tapping screw to lock the screw lock.
Fig. 7C is a perspective view of the assembly in Fig. 7B with the screw lock in a locked position.
Fig. 8 is a side cross-sectional view of the screw lock in Fig. 4A in an assembly with a first panel, a second panel, and a tapping screw in a locked position, taken along the plane of the page in Fig. 4A.

### DETAILED DESCRIPTION

Generally described, one or more aspects of the present disclosure relate to screw lock fasteners. In certain embodiments, this disclosure relates to a screw lock fastener that can be made of non-metal materials and provide high retention (e.g., 1000-2000N). In other embodiments, the screw lock fastener can be used on stainless steel parts to avoid corrosion issues (e.g., rust) with metal fasteners. The screw lock can also include a sealer to provide waterproof fastening. The screw lock illustratively can include three components, a lock, a retainer, and a sealer.

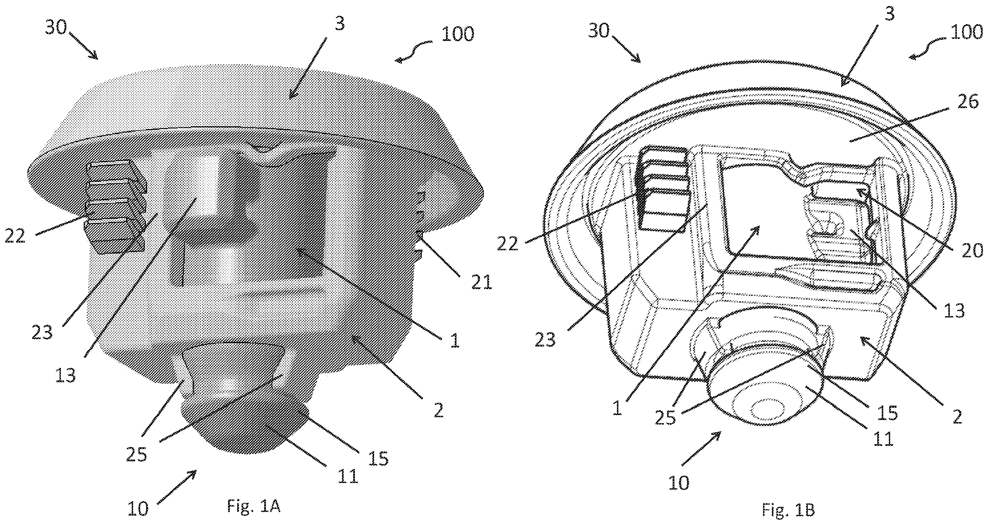

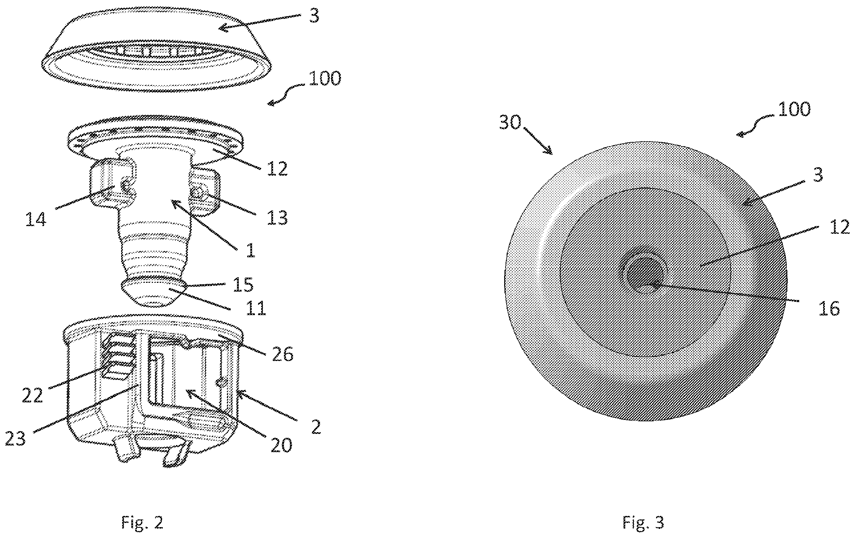

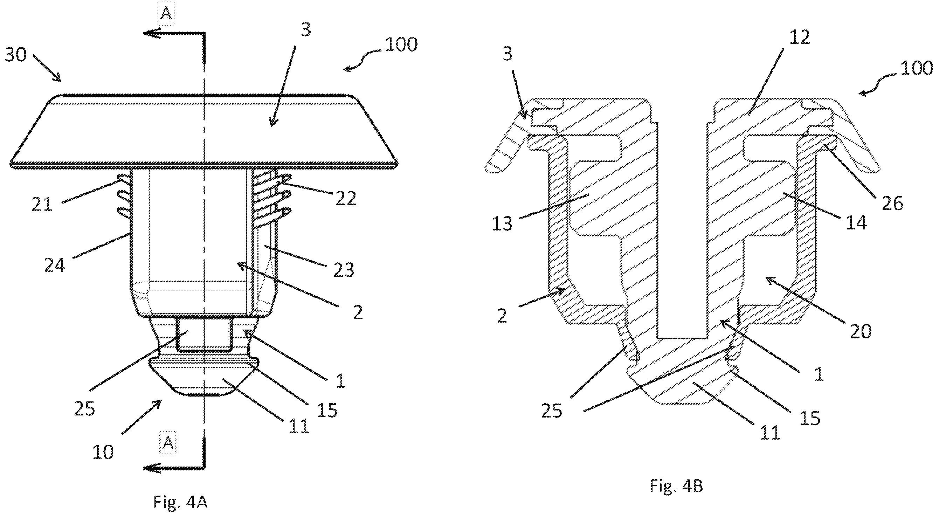

Fig. 1A-B show perspective views of an embodiment of a screw lock 100 including a lock 1, a retainer 2, and a sealer 3. The lock 1 can extend between a front end 10 and a rear end 30. The lock 1 can include a head 11 at the front end 10 and a disk 12 at the rear end 30 as illustrated in Fig. 3. The retainer 2 can retain the lock 1 inside a cavity 20 of the retainer. In some embodiments, the lock 1 can be retained substantially inside the retainer 2 except for the disk 12 and the head 11 (see Fig. 4B). The cavity 20 can extend between opposite sides of the retainer 2 and have openings on opposite sides of the retainer 2. In some embodiments, the retainer 2 can retain the lock 1 by having two or more arms 25 configured to engage the head 11 of the lock 1 for delivery condition. As shown in Fig. 1A-B, the head 11 can be tapered, with a tip of the head 11 be smaller, to allow the head 11 to slide through the two or more arms 25. The head 11 can also include a flange 15 extending around the head 11 such that after the head 11 has passed through the two or more arms 25, the flange 15 can stop the head 11 from moving relative to the two or more arms 25 and the lock 1 from exiting the retainer 2.

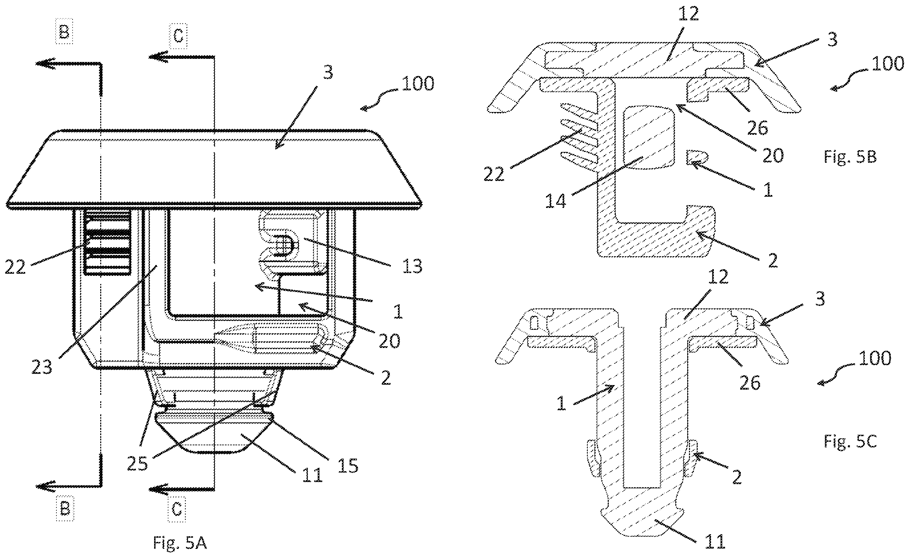

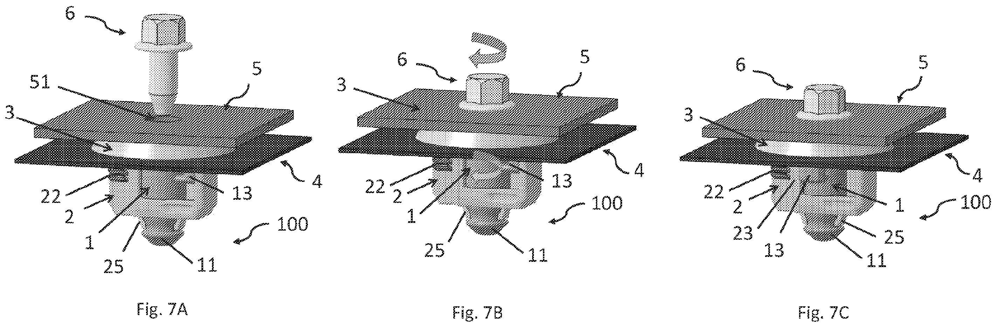

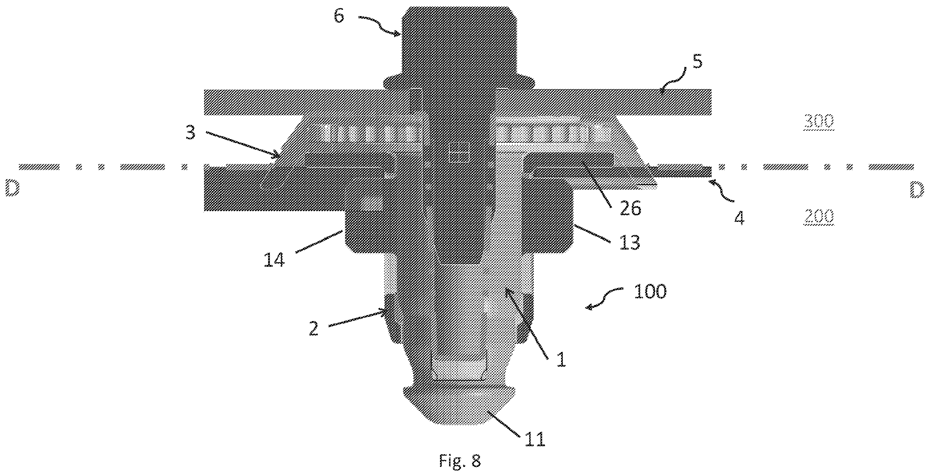

The lock 1 can include two blocks extending from opposite sides of the lock 1 as shown in Fig. 2. In some embodiments, rotating the lock 1 inside the cavity 20 of the retainer 2 can allow the blocks 13 and 14 to protrude from the openings of the cavity 20. The openings can offset each other on opposite sides of the retainer 2 such that the blocks 13 and 14 can protrude and rotate from opposite sides of the retainer 2. As shown in Fig. 1A, the screw lock 100 in a locked position can have the block 13 protruded out from one side of the retainer 2 and stop at the wall 23 of the retainer 2. Correspondingly, the screw lock 100 can have a wall 24 (see Fig. 4A) on the opposite of the retainer 2 configured to stop the block 14. In some embodiments, the retainer 2 can include a platform 26 at the rear end 30. When the screw lock 100 is in an unlocked position, the blocks 13 and 14 can be substantially inside the retainer 2 as shown in Fig. 4B and 5B. When the screw lock 100 is in the locked position, at least one part can be fastened between the protruding blocks 13 and 14 and the platform 26 as shown in Fig. 7C and 8.

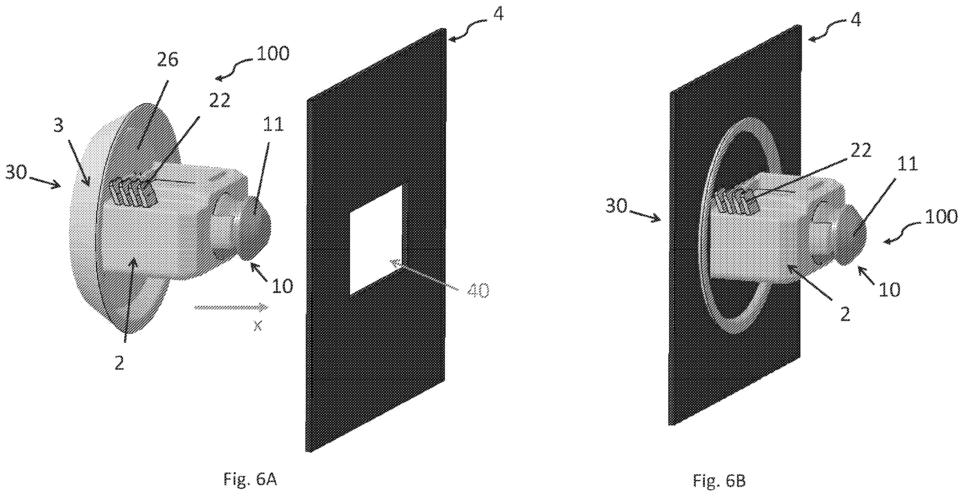

In some embodiments, as shown in Figs. 2-3, the screw lock 100 can include a sealer 3 that can be configured to wrap around the disk 12 of the lock 1. The disk 12 can be configured to be rotatable inside and relative to the sealer 3. In some embodiments, the screw lock 100 can also include snap fit joints 21 and 22 disposed on opposite sides of the retainer 2, offset each other, as shown in Fig. 4A. Illustratively, the screw lock 100 can be installed on a first part that is to be fastened to a second part. Figs. 6A and 6B illustrate an embodiment of the screw lock 100 that can fasten a first part 4 between the rear end 30 of the screw lock 100 and the snap fit joints 21 and 22. The first part 4 can be prepared with a hole 40 to allow the retainer to go through in a direction x as shown in Fig. 6A. In the illustrated embodiments, a profile of the retainer 2 and the hole 40 can both be substantially rectangular. Fig. 6B shows the first part 4 can be fastened between the platform 26 of the retainer 2 and the snap fit joints 22 of the retainer 2 such that the screw lock 100 can be installed on the first part 4. In the auto industry, for example, the screw lock can be pre-installed on a trim panel of a vehicle during the Body in White (BIW) stage before assembly.

In some embodiments, the screw lock can be locked in place with a screw (e.g., a stainless steel tapping screw) as shown in Figs. 7A-7C. For example, a screw lock can be used with a tapping screw to attach a body panel to the trim panel of a vehicle. After the screw lock 100 is installed on a first part 4, a second part 5 can be placed in contact with the sealer 3, aligning a hole 51 on the second plate 5 and a hole 16 on the disk 12 (see Fig. 3). As shown in Fig. 7A, a tapping screw 6 can enter through the hole 51 of the second plate 5, the hole 16 on the disk 12, and into the lock 1 such that the second plate 5 can be fastened between the tapping screw 6 and the sealer 3. Then, a torque can be applied on the tapping screw 6 to rotate the tapping screw 6 in a first direction (e.g., clockwise) to further tighten the second part and bring the lock 1 to rotate in the first direction (e.g., clockwise) as shown in Fig. 7B. The torque can bring the lock 1 to rotate for a certain degree (e.g., 90 degree) and protrude out of the cavity 20 of the retainer 2 until the blocks 13 and 14 are stopped at the walls 23 and 24 (see Fig. 4A). In the locked position as shown in Fig. 7C, the first plate 4 and the second plate 5 can be fastened between the tapping screw 6 and the blocks 13 and 14. Further, in certain embodiments, the tapping screw 6 can be unscrewed and removed from a screw lock so that the screw lock can be re-used. Illustratively, the tapping screw 6 can be removed by rotating the tapping screw 6, along with the lock 1, in a second direction (e.g., counterclockwise) opposite to the first direction. For example, a body panel of a vehicle attached by the screw lock can be removed by unscrewing and removing the tapping screw. The trim panel installed with the screw lock can then be re-used and fastened with the same body panel or another body panel.

When fastening stainless steel parts, metal materials can corrode and get rust very soon, especially under environments having humidity, oil, and heat. In some embodiments, various parts of the screw lock can be made of non-metal materials including plastic, polymide, nylon, glass fiber reinforced polymide (e.g., PA6-GF30), polyacrylamide, glass epoxy laminate (e.g., G10/FR-4), thermoplastic, thermoplastic polyurethane, polyoxymethylene (POM), TPV, and etc. For example, the lock 1 can be made of a non-metal material that can provide strength (e.g., PA6-GF30) such that the blocks 13 and 14 can provide high retention (e.g., 1000N-2000N) when the screw lock 100 is in a locked position (see Fig. 7C). The retainer 2 can be made of a material (e.g., PA66) that is not too rigid such that a special tool is not required to deform the snap fit joints 21 and 22 and insert the screw lock 100 into the hole 40 of the first plate 4 (see Fig. 6A-B). Finally, the sealer can be made of an elastic material (e.g., TPV) to provide waterproof feature. For example, as illustrated in Fig. 8, the sealer 3 can prevent moisture from a moisture environment 200 (e.g., exterior) to pass a line DD and enter the dry environment 300 (e.g., interior).

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the scope of the disclosure. Accordingly, this description is to be considered as illustrative and is for the purpose of teaching those skilled in the art the manner of making and using various embodiments of the disclosed glove box actuation assembly. It is to be understood that the forms of disclosure herein shown and described are to be taken as representative embodiments. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not iiecessarily infer that two elements are directly connected to each other. Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.

## Claims

1. A fastener (100), comprising:
a lock (1) extending between a front end (10) of the fastener and a rear end (30) of the fastener, the lock comprising a body, a disk (12) at the rear end, a head (11) at the front end, and two blocks (13, 14) extending from opposite sides of the body of the lock proximate the rear end;
a retainer (2) disposed over the lock, the retainer comprising:
a cavity (20) extending between two openings on opposite sides of the retainer, and
one or more snap fit joints (21, 22) disposed on an external surface of the retainer and proximate the rear end and configured to fasten a first part (4); and screw (6) configured to enter through a second part and into the body of the lock; wherein the body of the lock is substantially inside the cavity of the retainer,
and
wherein rotating the screw in a first direction causes the lock to rotate and the two blocks to protrude from the openings of the retainer, thereby locking the first part and the second part between the two blocks and the screw.

2. The fastener of Claim 1, wherein the retainer has a substantially rectangular profile.

3. The fastener of Claim 1, further comprising a sealer configured to extend over the disk of the lock.

4. The fastener of Claim 3, wherein the sealer is sized and shaped to radially extend from the disk of the lock to create a sealing between the first part and the second part.

5. The fastener of Claim 1, wherein the retainer further comprises two or more arms (25) configured to receive and engage the head of the lock to retain the lock inside the retainer.

6. The fastener of Claim 5, wherein the head of the lock is tapered such that the head of the lock can move past the two or more arms of the retainer and be stopped from moving back.

7. The fastener of Claim 1, wherein the lock comprises nylon and glass fiber.

8. The fastener of Claim 1, wherein the retainer comprises plastic.

9. The fastener of Claim 3, wherein the sealer comprises rubber.

10. The fastener of Claim 1, wherein the screw comprises a tapping screw.

11. The fastener of Claim 1, wherein the fastener is waterproof.

12. The fastener of Claim 1, wherein rotating the screw in a second direction opposite the first direction causes the lock to rotate and the two blocks of the lock to enter the cavity of the retainer.

13. The fastener of claim 1, wherein the disk extends radially from a first end of the body, and wherein rotating the screw in a first direction secures the first part between the disk and the one or more blocks, and secures the second part between the disk of the lock and the screw.

## Patentansprüche

1. Befestigungselement (100), das Folgendes umfasst:
eine Verriegelung (1), die sich zwischen einem vorderen Ende (10) des Befestigungselements und einem hinteren Ende (30) des Befestigungselements erstreckt, wobei die Verriegelung einen Körper, eine Scheibe (12) am hinteren Ende, einen Kopf (11) am vorderen Ende und zwei Blöcke (13, 14), die sich von einander gegenüberliegenden Seiten des Körpers der Verriegelung in der Nähe des hinteren Endes erstrecken, umfasst;
einen Halter (2), der über der Verriegelung angeordnet ist, wobei der Halter Folgendes umfasst:
einen Hohlraum (20), der sich zwischen zwei Öffnungen auf einander gegenüberliegenden Seiten des Halters erstreckt, und
eine oder mehrere Rastverschlussverbindungen (21, 22), die auf einer Außenfläche des Halters und nahe dem hinteren Ende angeordnet und zum Befestigen eines ersten Teils (4) ausgelegt sind; und
eine Schraube (6), die dazu ausgelegt ist, durch einen zweiten Teil und in den Körper der Verriegelung einzutreten; wobei sich der Körper der Verriegelung im Wesentlichen innerhalb des Hohlraums der Halterung befindet,
und
wobei das Drehen der Schraube in eine erste Richtung bewirkt, dass sich die Verriegelung dreht und die zwei Blöcke aus den Öffnungen des Halters hervorstehen, wodurch der erste Teil und der zweite Teil zwischen den zwei Blöcken und der Schraube verriegelt werden.

2. Befestigungselement nach Anspruch 1, wobei der Halter ein im Wesentlichen rechteckiges Profil aufweist.

3. Befestigungselement nach Anspruch 1, das ferner einen Abdichter umfasst, der dazu ausgelegt ist, sich über die Scheibe der Verriegelung zu erstrecken.

4. Befestigungselement nach Anspruch 3, wobei der Abdichter so bemessen und geformt ist, dass er sich radial von der Scheibe der Verriegelung erstreckt, um eine Dichtung zwischen dem ersten Teil und dem zweiten Teil zu erzeugen.

5. Befestigungselement nach Anspruch 1, wobei der Halter ferner zwei oder mehr Arme (25) umfasst, die dazu ausgelegt sind, den Kopf der Verriegelung aufzunehmen und in diesen einzugreifen, um die Verriegelung innerhalb des Halters zu halten.

6. Befestigungselement nach Anspruch 5, wobei der Kopf der Verriegelung verjüngt ist, so dass sich der Kopf der Verriegelung an den zwei oder mehr Armen des Halters vorbei bewegen kann und daran gehindert wird, sich zurück zu bewegen.

7. Befestigungselement nach Anspruch 1, wobei die Verriegelung Nylon und Glasfaser umfasst.

8. Befestigungselement nach Anspruch 1, wobei der Halter Kunststoff umfasst.

9. Befestigungselement nach Anspruch 3, wobei der Abdichter Gummi umfasst.

10. Befestigungselement nach Anspruch 1, wobei die Schraube eine Gewindeschneidschraube umfasst.

11. Befestigungselement nach Anspruch 1, wobei das Befestigungselement wasserdicht ist.

12. Befestigungselement nach Anspruch 1, wobei das Drehen der Schraube in eine zweite Richtung entgegengesetzt zu der ersten Richtung bewirkt, dass sich die Verriegelung dreht und die zwei Blöcke der Verriegelung in den Hohlraum des Halters eintreten.

13. Befestigungselement nach Anspruch 1, wobei sich die Scheibe radial von einem ersten Ende des Körpers erstreckt und wobei das Drehen der Schraube in einer ersten Richtung den ersten Teil zwischen der Scheibe und dem einen oder den mehreren Blöcken sichert und den zweiten Teil zwischen der Scheibe der Verriegelung und der Schraube sichert.

## Revendications

1. Pièce de fixation (100), comprenant :
un élément de verrouillage (1) s'étendant entre une extrémité avant (10) de la pièce de fixation et une extrémité arrière (30) de la pièce de fixation, l'élément de verrouillage comprenant un corps, un disque (12) à l'extrémité arrière, une tête (11) à l'extrémité avant, et deux blocs (13, 14) s'étendant à partir de côtés opposés du corps de l'élément de verrouillage à proximité de l'extrémité arrière ;
un élément de retenue (2) disposé par-dessus l'élément de verrouillage, l'élément de retenue comprenant :
une cavité (20) s'étendant entre deux ouvertures sur des côtés opposés de l'élément de retenue, et
un ou plusieurs joints à ajustement par encliquetage (21, 22) disposés sur une surface externe de l'élément de retenue et à proximité de l'extrémité arrière et configurés pour fixer une première partie (4) ; et
une vis (6) configurée pour entrer à travers une seconde partie et dans le corps de l'élément de verrouillage ;
dans laquelle le corps de l'élément de verrouillage est sensiblement à l'intérieur de la cavité de l'élément de retenue,
et
dans laquelle la mise en rotation de la vis dans une première direction amène l'élément de verrouillage à entrer en rotation et les deux blocs à faire saillie à partir des ouvertures de l'élément de retenue, ainsi verrouillant la première partie et la seconde partie entre les deux blocs et la vis.

2. Pièce de fixation de la revendication 1, dans laquelle l'élément de retenue a un profil sensiblement rectangulaire.

3. Pièce de fixation de la revendication 1, comprenant en outre un élément d'étanchéité configuré pour s'étendre par-dessus le disque de l'élément de verrouillage.

4. Pièce de fixation de la revendication 3, dans laquelle l'élément d'étanchéité est dimensionné et formé pour s'étendre radialement à partir du disque de l'élément de verrouillage pour créer une étanchéité entre la première partie et la seconde partie.

5. Pièce de fixation de la revendication 1, dans laquelle l'élément de retenue comprend en outre deux ou plus de deux bras (25) configurés pour recevoir, et entrer en prise avec, la tête de l'élément de verrouillage pour retenir l'élément de verrouillage à l'intérieur de l'élément de retenue.

6. Pièce de fixation de la revendication 5, dans laquelle la tête de l'élément de verrouillage est effilée de manière telle que la tête de l'élément de verrouillage peut se déplacer au-delà des deux ou plus de deux bras de l'élément de retenue et être empêchée de reculer.

7. Pièce de fixation de la revendication 1, dans laquelle l'élément de verrouillage comprend du nylon et de la fibre de verre.

8. Pièce de fixation de la revendication 1, dans laquelle l'élément de retenue comprend du plastique.

9. Pièce de fixation de la revendication 3, dans laquelle l'élément d'étanchéité comprend du caoutchouc.

10. Pièce de fixation de la revendication 1, dans laquelle la vis comprend une vis taraudeuse.

11. Pièce de fixation de la revendication 1, dans laquelle la pièce de fixation est hermétique à l'eau.

12. Pièce de fixation de la revendication 1, dans laquelle la mise en rotation de la vis dans une seconde direction opposée à la première direction amène l'élément de verrouillage à entrer en rotation et les deux blocs de l'élément de verrouillage à entrer dans la cavité de l'élément de retenue.

13. Pièce de fixation de la revendication 1, dans laquelle le disque s'étend radialement à partir d'une première extrémité du corps, et dans laquelle la mise en rotation de la vis dans une première direction assujettit la première partie entre le disque et l'un ou les plusieurs blocs, et assujettit la seconde partie entre le disque de l'élément de verrouillage et la vis.
